# FASCICULE DE BREVET EUROPEEN

(11) **EP 2 776 495 B1**
(45) Date de publication et mention de la délivrance du brevet: **07.10.2015**
(21) Numéro de dépôt: 12783206.1
(22) Date de dépôt: 05.11.2012
(51) Int. Cl.: C08F 12/30, C08J 3/12, H01M 4/90, H01M 4/92

(54) **PROCEDE DE PREPARATION DE PARTICULES APTES A CATALYSER LA REDUCTION DE L'OXYGENE OU L'OXYDATION DE L'HYDROGENE CONDUCTRICES DE PROTONS PAR GREFFAGE A LEUR SURFACE DE POLYMERES CONDUCTEURS DE PROTONS**
VERFAHREN ZUR HERSTELLUNG PROTONENLEITENDER PARTIKEL ZUR KATALYSIERTEN REDUKTION VON SAUERSTOFF ODER OXIDATION VON WASSERSTOFF DURCH PFROPFUNG PROTONENLEITENDER POLYMERE AUF DER OBERFLÄCHE DIESER PARTIKEL
METHOD FOR PREPARING PROTON-CONDUCTING PARTICLES CAPABLE OF CATALYZING THE REDUCTION OF OXYGEN OR THE OXIDATION OF HYDROGEN BY GRAFTING PROTON-CONDUCTING POLYMERS TO THE SURFACE OF THE PARTICLES

(30) Priorité: 07.11.2011 FR 1160117
(43) Date de publication de la demande: 17.09.2014
(73) Titulaire: Commissariat à l'Énergie Atomique et aux Énergies Alternatives, 75015 Paris (FR); Centre National de la Recherche Scientifique, 75016 Paris (FR)
(72) Inventeur: BUVAT, Pierrick, F-37250 Montbazon (FR); FERRANDEZ, Anne-Claire, F-14880 Colleville Montgomery (FR); BARENTON, Steve, F-86000 Poitiers (FR); COUTANCEAU, Christophe, F-86000 Poitiers (FR)
(74) Mandataire: Ahner, Philippe
(86) Numéro de dépôt international: PCT/EP2012/071859
(87) Numéro de publication internationale: WO 2013/068319

(56) Documents cités:
- ZHANG L ET AL: "Preparation of platinum nanoparticles using star-block copolymer with a carboxylic core", JOURNAL OF COLLOID AND INTERFACE SCIENCE, ACADEMIC PRESS, NEW YORK, NY, US, vol. 298, no. 1, 1 juin 2006 (2006-06-01), pages 177-182, XP024909620, ISSN: 0021-9797, DOI: 10.1016/J.JCIS.2005.12.014 [extrait le 2006-06-01]
- LONG GIANG BACH ET AL: "Synthesis and characterization of poly(2-hydroxyethyl methacrylate)-functionalized Fe-Au/core-shell nanoparticles", JOURNAL OF APPLIED POLYMER SCIENCE, 1 janvier 2011 (2011-01-01), pages N/A-N/A, XP055031634, ISSN: 0021-8995, DOI: 10.1002/app.35530

## Description

### DOMAINE TECHNIQUE

La présente invention se rapporte à un procédé de préparation de particules spécifiques aptes à catalyser la réduction de l'oxygène ou l'oxydation de l'hydrogène, ces particules étant, de plus, conductrices de protons grâce à une fonctionnalisation desdites particules avec des polymères organiques conducteurs de protons.

Ces particules ont pour caractéristique de présenter une activité catalytique (notamment, pour l'oxydation de l'hydrogène ou la réduction de l'oxygène) tout en présentant une conductivité protonique.

De ce fait, ces particules trouvent leur application dans l'élaboration de matériaux d'électrodes, en particulier de matériaux destinés à entrer dans la constitution de couches catalytiques d'électrodes pour piles à combustible, telles que les piles fonctionnant à H₂/air ou à H₂/O₂ (connues sous l'abréviation PEMFC signifiant « Proton Exchange Membrane Fuel Cell »).

Ainsi, la présente invention se situe dans le domaine des piles à combustible fonctionnant sur le principe de l'oxydation de l'hydrogène et la réduction de l'oxygène.

### ETAT DE LA TECHNIQUE ANTÉRIEURE

Une pile à combustible de ce type est un générateur électrochimique, qui convertit l'énergie chimique en énergie électrique grâce à deux réactions électrochimiques : une réaction d'oxydation à l'anode d'un combustible (l'hydrogène) combinée à une réaction de réduction à la cathode d'un comburant (l'air ou l'oxygène).

Classiquement, ce type de piles à combustible comporte une pluralité de cellules électrochimiques montées en série, chaque cellule comprenant deux électrodes de polarité opposée séparées par une membrane échangeuse de protons faisant office d'électrolyte solide, cette membrane assurant le passage vers la cathode des protons formés, par réaction électrochimique, lors de l'oxydation du combustible à l'anode.

Les réactions électrochimiques susmentionnées (oxydation et réduction) se produisent au niveau de zones spécifiques des électrodes (dites, zones actives correspondant structurellement à des couches catalytiques) qui forment la jonction entre la couche de diffusion (au niveau de laquelle se produit l'alimentation en réactifs) des électrodes et la membrane et nécessitent, pour se produire, l'utilisation de catalyseurs, qui consistent, classiquement, pour les piles du type PEMFC, en des particules de platine.

Compte tenu des coûts impliqués par la présence d'un catalyseur comme le platine, il convient d'obtenir un maximum de surface catalytique pour une masse donnée de métal, un tel objectif pouvant être atteint par des particules de platine de tailles nanométriques (dénommées également nanoparticules de platine).

Il convient également, pour que les réactions électrochimiques puissent avoir lieu, que les particules de platine soient en contact à la fois avec du combustible ou du comburant (selon que l'on se situe au niveau de l'anode ou de la cathode), du conducteur protonique constitutif de la membrane et du conducteur électronique entrant dans la constitution de l'électrode (ce conducteur électronique étant classiquement un matériau carboné), cette zone de contact étant connue sous l'appellation de point triple, l'électrode étant d'autant plus efficace que le nombre de points triples est élevé.

En d'autres termes, en ces points triples, se présentent au niveau des particules de platine :
- une continuité physique avec la membrane électrolytique, pour assurer une conduction des protons H⁺ ;
- une continuité physique avec le conducteur électronique, pour assurer la conduction des électrons ; et
- une continuité physique avec la zone de diffusion des électrodes, pour assurer la diffusion des gaz (l'oxygène ou l'hydrogène pour les piles PEMFC).

Le maintien dans le temps de ces points triples suppose le respect de l'intégrité des zones de contacts entre les différents éléments entrant dans la constitution de ces points triples, ce qui implique un maintien de l'intégrité physique de ces différents éléments, notamment des particules de platine.

Or certaines études ont montré qu'il est possible d'assister, en cours de fonctionnement d'une pile, à une dégradation des particules de platine (induisant, de ce fait, une diminution de surface active) soit par des phénomènes de dissolution ou des phénomènes d'augmentation de tailles de particules (découlant, classiquement, de phénomènes d'agglomération).

Ces phénomènes de dissolution peuvent se produire avec des piles fonctionnant à très faible pH (par exemple, un pH inférieur à 1) et à potentiels élevés de fonctionnement à la cathode (par exemple, un potentiel supérieur à 1 V par rapport à ERH (ERH signifiant électrode réversible à dihydrogène) le platine dissous pouvant se retrouver soit dans l'eau formée au cours du fonctionnement de la pile soit à l'intérieur de la membrane électrolytique, généralement, polymérique, ce qui conduit, en son sein, à la formation de nanocristaux de platine inactifs.

Quant aux phénomènes d'augmentation, ils peuvent se produire avec des piles dont les nanoparticules de platine présentent une mobilité importante à la surface du support généralement carboné, sur lequel elles sont déposées, cette mobilité dépendant de l'énergie de surface de celui-ci.

Pour contourner ces phénomènes, il peut être fait appel à de forts taux de chargement en particules de platine avec les inconvénients que cela représente en termes de coûts de production, eu égard au prix très élevé du platine sur les marchés.

Afin de diminuer les taux de chargement tout en accédant à une surface active efficace, les études ont porté sur l'optimisation des assemblages électrode (ici, comprenant des particules de platine)-membrane.

Ainsi, il a été proposé de juxtaposer, par contact intime, les différents éléments (particules de platine, conducteur électrique et électrolyte) nécessaires à la création des points triples, cette juxtaposition pouvant consister :
- à mélanger des particules de platine avec de la poudre de carbone (remplissant le rôle de conducteur électrique) et à imprégner l'ensemble avec de l'électrolyte, de sorte à garantir un meilleur contact avec la membrane ;
- à déposer par des techniques de dépôts de couches minces (telles que l'électrodéposition ou la pulvérisation par voie physique) des particules de platine, ce qui permet de déposer du platine selon de faibles concentrations tout en conservant une activité catalytique très élevée.

Toutefois, les ensembles résultant de ces techniques sont fragiles en raison des liaisons faibles impliquées pour juxtaposer les éléments constitutifs de ces ensembles, ce qui ne permet pas d'empêcher les phénomènes de dégradation dus à la migration des particules de platine occasionnant, de ce fait, une diminution de la durée de vie de ces ensembles.

Au vu de ce qui précède, les auteurs de la présente invention se sont fixé pour objectif de proposer un procédé de fabrication de particules comprenant un matériau apte à catalyser l'oxydation de l'hydrogène ou la réduction de l'hydrogène, lesquelles particules sont liées à un conducteur protonique (en l'occurrence des polymères conducteurs de protons) et, éventuellement à un conducteur électronique (tel qu'un matériau carboné) par des liaisons plus fortes que les ensembles existant dans l'art antérieur, de sorte à améliorer la pérennité des points triples, lorsque ces particules sont destinées à être utilisées pour la constitution de couches catalytiques de piles à combustible du type PEMFC.

### EXPOSÉ DE L'INVENTION

Ainsi, l'invention a trait à un procédé de préparation de particules comprenant un matériau apte à catalyser la réduction de l'oxygène ou l'oxydation de l'hydrogène, lesdites particules étant fonctionnalisées par des polymères comprenant au moins un motif répétitif porteur d'au moins un groupe conducteur de protons, ledit procédé comprenant une étape a) de mise en contact de particules comprenant un matériau apte à catalyser la réduction de l'oxygène ou l'oxydation de l'hydrogène avec un polymère comprenant au moins un motif répétitif porteur d'au moins un groupe conducteur de protons et comprenant au moins une partie correspondant à un reste organique d'un composé amorceur d'une polymérisation du type ATRP, ledit reste comprenant au moins un groupe apte à se greffer à la surface desdites particules et lesdites particules étant liées, par exemple, par covalence à un matériau carboné, moyennant quoi l'on obtient des particules greffées par des polymères comprenant au moins un motif répétitif porteur d'au moins un groupe conducteur de protons.

Avant d'entrer plus en détail dans la présente description, nous précisons les définitions suivantes.

Par polymère, on entend, classiquement, au sens de l'invention, un composé constitué par l'enchaînement d'un ou plusieurs motifs répétitifs.

Par motif répétitif, on entend, classiquement, au sens de l'invention, un groupe organique bivalent (c'est-à-dire un groupe formant pont) issu d'un monomère après polymérisation de celui-ci.

Par polymérisation du type ATRP, on entend, une polymérisation radicalaire par transfert d'atomes (ATRP correspondant à l'abréviation de la terminologie anglaise « Atom Transfer Radical Polymerization »). Le mécanisme de ce type de polymérisation sera plus en détail ci-dessous.

Par composé amorceur de polymérisation du type ATRP, on entend un composé comprenant au moins un groupe apte à amorcer ce type de polymérisation, le composé amorceur de polymérisation comprenant, en outre, un groupe apte à se greffer à la surface des particules susmentionnées, lequel groupe subsiste dans le reste de composé amorceur une fois que celui-ci a amorcé la polymérisation.

Par reste d'un composé amorceur, on entend le reste organique qui subsiste du composé amorceur lorsque celui-ci a réagi pour amorcer la polymérisation, le reste de composé amorceur comprenant au moins un groupe apte à se greffer à la surface des particules susmentionnées, ce qui signifie que ce groupe réagit en présence desdites particules pour se fixer par covalence à la surface de celles-ci.

Ainsi, grâce à la mise en oeuvre du procédé de l'invention, il est ainsi possible d'obtenir des particules comprenant un matériau apte à catalyser la réduction de l'oxygène ou l'oxydation de l'hydrogène greffées par covalence *via* un reste de composé amorceur par des polymères conducteurs de protons, ce qui permet, lorsque ces particules sont destinées à entrer dans la constitution d'électrodes (notamment au niveau de couches catalytiques de celles-ci) d'assurer une bonne continuité physique avec l'électrolyte adjacent, lorsque celui-ci est à base également de polymère(s) conducteur(s) de protons.

Comme mentionné ci-dessous, le procédé de l'invention comporte une étape a) de mise en contact de particules comprenant un matériau apte à catalyser la réduction de l'oxygène ou l'oxydation de l'hydrogène avec au moins un polymère comprenant au moins un motif répétitif porteur d'au moins un groupe conducteur de protons et comprenant au moins une partie correspondant à un reste organique d'un composé amorceur d'une polymérisation du type ATRP, ledit reste comprenant au moins un groupe apte à se greffer à la surface desdites particules, moyennant quoi l'on obtient des particules greffées des polymères comprenant au moins un motif répétitif porteur d'au moins un groupe conducteur de protons.

Cette étape a) de mise en contact peut comprendre une opération de dispersion des particules susmentionnées, par exemple, dans un solvant électrophile (tel qu'un solvant amine, tel que l'hexylamine) suivie d'une opération de mise en contact de la dispersion obtenue avec un ou plusieurs polymères tels que définis ci-dessus dans des conditions suffisantes à permettre le greffage par covalence de ces polymères *via* un reste de composé amorceur de polymérisation du type ATRP.

Les particules comprenant un matériau apte à catalyser la réduction de l'oxygène ou l'oxydation de l'hydrogène peuvent être des particules métalliques, à savoir des particules comprenant un ou plusieurs éléments métalliques (auquel cas, lorsqu'il y a plusieurs éléments métalliques, on pourra parler de particules en alliage(s) métallique(s)).

Des particules métalliques particulièrement appropriées peuvent être des particules comprenant un métal noble, tel que le platine, le ruthénium, le palladium et des mélanges de ceux-ci.

Lorsque les particules obtenues selon l'invention sont destinées à être utilisées dans des piles PEMFC, les particules métalliques sont avantageusement des particules en platine.

Le reste de composé amorceur est un reste d'un composé amorceur d'une polymérisation du type ATRP, à savoir un composé comprenant au moins un groupe apte à amorcer la polymérisation ATRP.

Le reste de composé amorceur peut être un reste d'un composé organique halogénure (à savoir, un composé comprenant au moins un atome d'halogène lié à un atome de carbone, le groupe résultant pouvant être symbolisé par -C-X, X représentant un atome d'halogène)comportant au moins un groupe choisi parmi - S-S- et -SH, -S-S- étant un groupe disulfure divalent, c'est-à-dire un groupe disulfure formant pont entre deux autres groupes et -SH étant un groupe monovalent thiol.

Le groupe apte à se greffer à la surface de particules consiste, pour ce type de composés, en un groupe choisi parmi -S-S- et -SH.

Le reste peut être, plus précisément, un reste d'un composé comportant un groupe disulfure -S-S-formant pont entre deux parties de ce composé, au moins une de ces deux parties comportant un groupe phényle porteur d'un groupe amide -NH-CO-R¹, R¹ étant un groupe hydrocarboné porteur d'au moins un atome d'halogène (il s'entend, dans ce cas, que le groupe amide est lié à un atome de carbone du groupe phényle *via* l'atome d'azote du groupe -NH-).

Les deux parties susmentionnées peuvent être identiques.

En particulier, le reste peut être un reste d'un composé particulier répondant à la définition donnée ci-dessus peut être un composé de formule (I) ci-dessous : 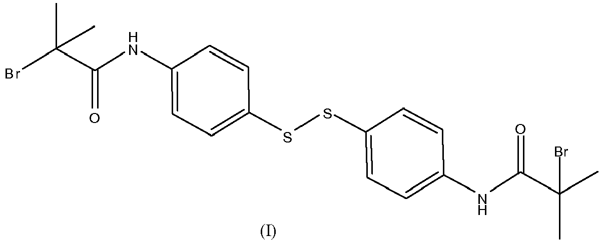 ce reste pouvant être ainsi représenté par la formule (II) suivante : 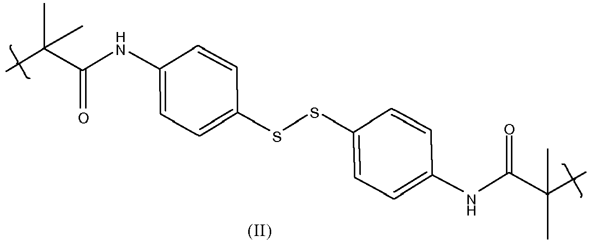 les accolades indiquant les endroits par lesquels ce reste est fixé, dans ce cas à une première chaîne polymérique et à une deuxième chaîne polymérique.

Concernant le polymère, le groupe conducteur de protons peut être un groupe acide sulfonique -SO₃H, un groupe acide carboxylique -CO₂H ou un groupe acide phosphonique -PO₃H₂, ces groupes pouvant être présents éventuellement sous forme de sels.

Le polymère peut appartenir à la famille des polysulfones, polyéthercétones, polyphénylènes, polystyrènes, polymères aliphatiques fluorés, étant entendu que ces polymères doivent comporter des groupes conducteur de protons, par exemple des groupes acide sulfonique, acide phosphonique ou acide carboxylique.

En particulier, le polymère peut être un polymère issu de la polymérisation d'un ou plusieurs monomères choisis parmi :
*des monomères éthyléniques porteurs d'au moins un groupe acide sulfonique, éventuellement sous forme d'un sel ;
*des monomères éthyléniques porteurs d'au moins un groupe acide carboxylique, éventuellement sous forme d'un sel ; et
*des monomères éthyléniques porteurs d'au moins un groupe acide phosphonique, éventuellement sous forme d'un sel.

Ces monomères peuvent être éventuellement fluorés.

Encore plus particulièrement, ces monomères peuvent répondre à la formule (III) suivante : 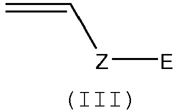 dans laquelle :
- Z correspond à un groupe phénylène ; et
- E correspond à un groupe conducteur de protons, éventuellement sous forme d'un sel, tel qu'un groupe acide sulfonique, un groupe acide phosphonique ou un groupe acide carboxylique.

En particulier, le polymère peut être issu de la polymérisation d'au moins un monomère de formule (III) susmentionnée en présence d'un composé amorceur de formule (I) susmentionnée.

Un monomère spécifique répondant à la définition donnée ci-dessus est un monomère acidestyrènesulfonique, par exemple sous forme d'un sel, tel qu'un sel de sodium (auquel cas, on pourra parler de styrènesulfonate de sodium).

Un exemple de ce type de monomère est un monomère de formule (IV) suivante : 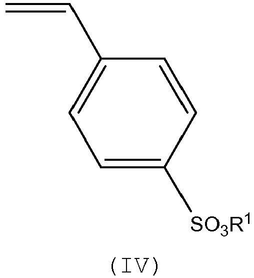 dans laquelle R¹ est un atome d'hydrogène ou un cation (par exemple, un cation de métal alcalin).

Ainsi, un polymère spécifique destiné à être mis en contact avec les particules susmentionnées peut être un polymère répondant à la formule (V) suivante : 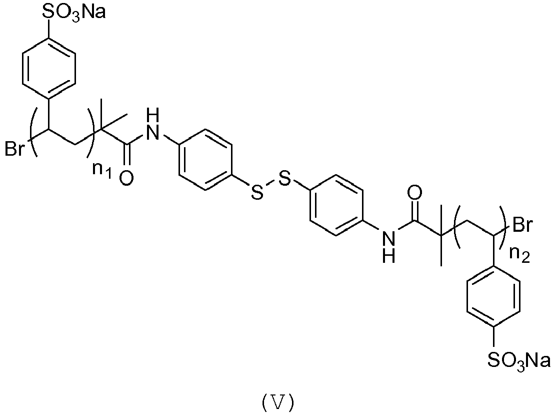 ce polymère comprenant une première chaîne polymérique et une deuxième chaîne polymérique liées de part et d'autre du reste de formule (II) telle que définie ci-dessus, n₁ et n₂ correspondant au nombre de répétition du motif pris entre parenthèses.

Lorsque le groupe apte à se greffer est un groupe disulfure -S-S-, le polymère, en présence de particules, va se scinder en deux restes organiques par clivage homolytique de la liaison entre les deux atomes de soufre, les deux restes consistant en des espèces radicalaires, les électrons libres étant situés au niveau des atomes de soufre, ces électrons libres s'associant chacun avec un électron présent à la surface des particules pour former une liaison covalente entre les restes susmentionnés et les particules *via* les atomes de soufre, le produit résultant pouvant être schématisé de la façon suivante : 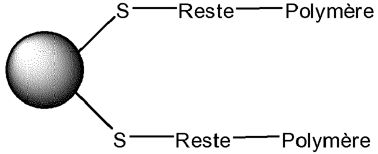 la sphère pleine correspondant à une particule, -S-Reste- correspondant à un reste de composé amorceur formant pont entre la particule et le polymère (respectivement, une première chaîne polymérique et une deuxième chaîne polymérique).

Lorsque le groupe apte à se greffer est un groupe thiol -SH, le reste de composé amorceur lié à un polymère, en présence de particules, réagit *via* ce groupe avec la surface des particules pour former une liaison covalente avec celles-ci, moyennant quoi il subsiste un reste de formule identique à celui mentionné ci-dessus, si ce n'est le fait que l'atome d'hydrogène lié à l'atome de soufre est remplacé par une liaison covalente entre le soufre et une particule.

Préalablement à l'étape a), le procédé de l'invention peut comprendre une étape de préparation par polymérisation ATRP du polymère mentionné à l'étape a).

Comme indiqué ci-dessus, cette étape de préparation est régie par les mécanismes de la polymérisation ATRP, qui fonctionne sur le principe de la formation réversible et rapide d'espèces dites « espèces dormantes » par création d'une liaison covalente avec une espèce radicalaire réactive.

Cette étape de polymérisation est réalisée en présence d'un ou plusieurs monomères et d'un composé amorceur d'une polymérisation ATRP.

Le composé amorceur d'une polymérisation du type ATRP est un composé comprenant au moins un groupe apte à amorcer la polymérisation ATRP, c'est-à-dire un groupe apte à se cliver au niveau d'une liaison pour former une première espèce radicalaire et une deuxième espèce radicalaire, la première espèce radicalaire réagissant ultérieurement, avec un premier carbone porteur d'une double liaison appartenant au monomère, la deuxième espèce radicalaire se fixant à un deuxième atome opposé au premier carbone porteur de la double liaison.

En d'autres termes, ce mécanisme peut être résumé selon le schéma réactionnel suivant :

Z-Y + C=C → Z-C-C-Y

Z-Y correspondant à l'amorceur susmentionné avec Z correspondant à la première espèce et Y correspondant à la deuxième espèce, l'espèce Z-C-C-Y étant une espèce dormante, qui peut croître par additions successives de monomères sur des radicaux libres, comme dans une polymérisation radicalaire classique, les radicaux libres étant créés par départ du groupe Y, qui se fixe ensuite après insertion du monomère à l'extrémité de la chaîne polymérique, laquelle constitue toujours une espèce dormante qui peut continuer à croître dès lors qu'il subsiste des monomères dans le milieu de polymérisation.

Pour des raisons de simplicité, nous avons représenté ci-dessus uniquement la double liaison du monomère.

En outre, le composé amorceur utilisé dans le cadre de cette étape de préparation comprend au moins un groupe apte à se greffer à la surface des particules susmentionnées, c'est-à-dire un groupe apte à réagir avec la surface desdites particules pour former une liaison covalente, moyennant quoi il subsiste un reste de cet amorceur lié de façon covalente à la surface desdites particules.

Le composé amorceur utilisé dans le cadre de cette étape peut être un composé organique halogénure (à savoir, un composé comprenant au moins un atome d'halogène lié à un atome de carbone, le groupe résultant pouvant être symbolisé par -C-X, X représentant un atome d'halogène) comportant au moins un groupe choisi parmi -S-S- et -SH, -S-S- étant un groupe disulfure divalent, c'est-à-dire un groupe disulfure formant pont entre deux autres groupes du composé et -SH étant un groupe monovalent thiol.

Dans ce type de composés, le groupe apte à amorceur une polymérisation du type ATRP est le groupe -C-X mentionné ci-dessus, ce groupe pouvant se cliver, de façon homolytique, au niveau de la liaison carbone-halogène pour former deux espèces radicalaires, une première espèce radicalaire carbone (pouvant être symbolisé par -C·) et une deuxième espèce radicalaire consistant en un radical halogène (pouvant être symbolisé par X·), la première espèce réagissant avec une extrémité de la double liaison du monomère et la deuxième espèce réagissant avec l'extrémité opposée de la double liaison.

Le groupe apte à se greffer à la surface de particules consiste, pour ce type de composés, en un groupe choisi parmi -S-S- et -SH.

Ce type de composés est particulièrement adapté en vue d'être greffé à la surface de particules de platine.

Des composés répondant à cette spécificité peuvent être des composés comportant un groupe disulfure -S-S-, en particulier, des composés symétriques, c'est-à-dire des composés comportant une symétrie autour de la liaison disulfure, ce qui signifie, en d'autres termes, que les deux parties du composé situées de part et d'autre de la liaison disulfure sont identiques.

Plus précisément, des composés répondant à cette spécificité peuvent être des composés comportant un groupe disulfure -S-S- formant pont entre deux parties de ces composés, au moins une de ces deux parties comportant un groupe phényle porteur d'un groupe amide -NH-CO-R¹, R¹ étant un groupe hydrocarboné porteur d'au moins un atome d'halogène (il s'entend, dans ce cas, que le groupe amide est lié à un atome de carbone du groupe phényle *via* l'atome d'azote du groupe -NH-).

Les deux parties susmentionnées peuvent être identiques.

Un composé particulier répondant à la définition donnée ci-dessus peut être un composé de formule (I) ci-dessous :

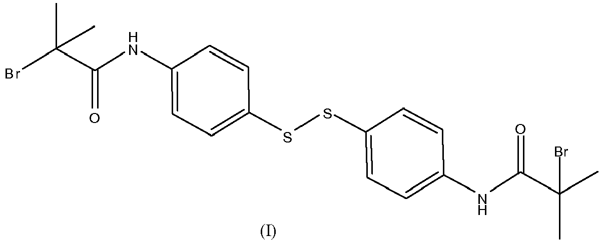

Ce type de composés peut être synthétisé par une réaction d'acylation entre un composé aminophényledisulfure et un composé chlorure d'acyle, en milieu basique et solvant organique et en présence éventuelle d'un catalyseur, cette réaction d'acylation se produisant selon un mécanisme d'addition-fragmentation.

A titre d'exemple, lorsqu'il s'agit de préparer un composé de formule (I) susmentionnée, la réaction d'acylation peut se produire entre un composé 4-aminophényle disulfure et un composé bromoisobutyrate selon le schéma réactionnel suivant : 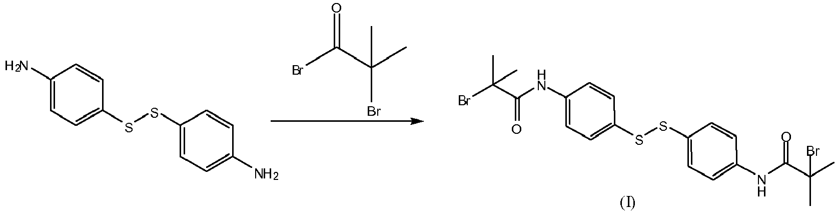 cette réaction pouvant être réalisée avec de la bipyridine, comme catalyseur, du chloroforme comme solvant organique, dans une gamme de températures allant de 0°C à la température ambiante.

Les monomères aptes à être utilisés dans le cadre de l'étape de polymérisation peuvent être tous types de monomères compatibles avec une polymérisation ATRP et comprenant au moins un groupe conducteur de protons éventuellement sous forme d'un sel.

Ces monomères peuvent être notamment choisis de sorte, après polymérisation, à former des chaînes polymériques appartenant à la famille des polysulfones, polyéthercétones, polyphénylènes, polystyrènes, polymères aliphatiques fluorés, étant entendu que ces polymères doivent comporter des groupes conducteurs de protons, par exemple des groupes acide sulfonique, acide phosphonique ou acide carboxylique.

En particulier, des monomères peuvent être :
*des monomères éthyléniques porteurs d'au moins un groupe acide sulfonique, éventuellement sous forme d'un sel ;
*des monomères éthyléniques porteurs d'au moins un groupe acide carboxylique, éventuellement sous forme d'un sel ; et
*des monomères éthyléniques porteurs d'au moins un groupe acide phosphonique, éventuellement sous forme d'un sel.

Ces monomères peuvent être éventuellement fluorés.

Encore plus particulièrement, ces monomères peuvent répondre à la formule (III) suivante : 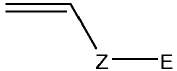 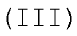 dans laquelle :
- Z correspond à un groupe phénylène ; et
- E correspond à un groupe conducteur de protons, éventuellement sous forme d'un sel, tel qu'un groupe acide sulfonique, un groupe acide phosphonique ou un groupe acide carboxylique.

Un monomère spécifique répondant à la définition donnée ci-dessus est un monomère acidestyrènesulfonique, par exemple sous forme d'un sel, tel qu'un sel de sodium (auquel cas, on pourra parler de styrènesulfonate de sodium).

Un exemple de ce type de monomère est un monomère de formule (IV) suivante : 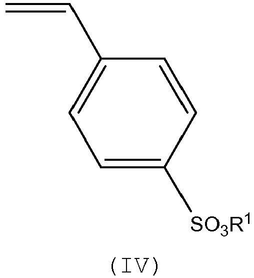 dans laquelle R¹ est un atome d'hydrogène ou un cation (par exemple, un cation de métal alcalin).

Outre la présence d'un ou plusieurs monomères tels que définis ci-dessus, l'étape de polymérisation se déroule, classiquement, en présence d'un sel métallique (par exemple, un halogénure métallique, tel qu'un halogénure de cuivre, comme le chlorure de cuivre) et d'un ligand organique.

On précise que, par ligand organique, on entend un composé organique comprenant au moins un doublet libre apte à venir combler une lacune électronique d'un élément métallique (en l'occurrence, dans notre cas, une lacune électronique sur l'élément métallique du sel susmentionné) pour former un complexe métallique.

A titre d'exemple, un ligand organique approprié peut être un composé appartenant à la famille des composés pyridines, tels que la bipyridine.

L'étape de polymérisation peut être réalisée, en outre, dans un mélange eau/solvant organique (par exemple, un solvant alcoolique) sous flux d'un gaz inerte (tel qu'un flux d'argon) pendant une température et durée appropriées pour engendrer la polymérisation.

En outre, cette étape de polymérisation peut être suivie d'une étape d'hydrolyse destinée à protoner les groupes conducteurs de protons, lorsqu'ils se présentent sous forme d'un sel (soit, en d'autres termes, cette étape consiste à remplacer les cations du sel par des atomes d'hydrogène).

Les masses molaires moyennes des polymères obtenus à l'issue de l'étape de polymérisation peuvent aller de 1000 à 1 000 000 g/mol, de préférence de 2000 à 200 000 g/mol.

Préalablement à l'étape a), le procédé de l'invention peut comprendre également une étape de préparation desdites particules susmentionnées, à savoir des particules comprenant un matériau apte à catalyser l'oxydation de l'hydrogène ou la réduction de l'oxygène.

Lorsque les particules sont des particules métalliques, la préparation de ces dernières peut consister à réduire un sel métallique en faisant réagir celui-ci avec un agent réducteur.

Par exemple, lorsque les particules métalliques sont des particules de platine, elles peuvent être préparées par réduction d'un sel de platine avec un agent réducteur.

Le sel de platine peut être un sel d'halogénure de platine, éventuellement hydraté, tel que H₂PtCl₆.6H₂O.

L'agent réducteur peut être un hydrure métallique, et plus particulièrement un borohydrure métallique, tel que le borohydrure de sodium (NaBH₄).

La préparation peut être réalisée dans un milieu du type émulsion « huile-dans-eau » (correspondant à la terminologie anglaise « water-in-oil »), l'huile pouvant correspondre à un composé hydrocarbure, tel que l'hexane.

D'un point de vue pratique, la préparation de particules de platine dans un tel milieu peut se dérouler par la mise en oeuvre des opérations suivantes :
- une opération de mise en contact d'un sel de platine (par exemple, H₂PtCl₆-H₂O) préalablement dissous dans de l'eau avec un milieu comprenant une huile et éventuellement un agent dispersant (par exemple, du tétraéthylèglycoldodécyléther);
- une opération d'ajout au mélange résultant de l'opération précédente d'un agent réducteur, en une ou plusieurs fois, à l'issue de laquelle le mélange résultant est agité pendant une durée suffisante jusqu'à cessation de tout dégagement gazeux (cette cessation indiquant que la réaction de réduction est achevée).

Le mélange final comprend ainsi des particules de platine, lequel mélange peut être utilisé tel quel pour la mise en oeuvre de l'étape a) (on pourra ainsi dire que l'étape a) est réalisée *in situ).*

En variante, le mélange final peut être traité (par exemple, par filtration) de sorte à isoler les particules de platine obtenues, ces dernières étant destinées à être utilisées pour la mise en oeuvre de l'étape a).

Outre le fait que les particules obtenues selon le procédé de l'invention sont fonctionnalisées par des polymères comprenant au moins un motif répétitif porteur d'au moins un groupe conducteur de protons ou précurseur de celui-ci, ces particules sont également liées (par exemple, par covalence) à un matériau carboné (pouvant être assimilé à un support carboné), tel que du graphite, du noir de carbone, des fibres de carbone, des tubes de carbone (tels que des nanotubes de carbone), du graphène et des mélanges de ceux-ci.

La liaison à un matériau carboné peut intervenir à différents moments de la mise en oeuvre du procédé de l'invention.

Selon un premier mode de réalisation, les particules peuvent être utilisées déjà liées à un matériau carboné lors de la mise en oeuvre de l'étape a).

Ces particules déjà liées à un matériau carboné peuvent être préparées préalablement à l'étape de mise en oeuvre de l'étape a).

Dans ce cas, le procédé de l'invention peut comprendre, avant la mise en oeuvre de l'étape a), une étape de préparation de particules comprenant un matériau apte à catalyser la réduction de l'oxygène ou l'oxydation de l'hydrogène liées à un matériau carboné.

Selon une première variante, lorsque les particules sont des particules métalliques, la préparation de ces dernières peut comprendre :
- une opération de réduction d'un sel métallique en faisant réagir celui-ci avec un agent réducteur, moyennant quoi l'on obtient des particules métalliques ;
- une opération de mise en contact du milieu résultant de l'opération précédente avec le matériau carboné destiné à être lié aux particules, moyennant quoi l'on obtient des particules métalliques liées à un matériau carboné.

Par exemple, lorsque les particules métalliques sont des particules de platine, l'étape de réduction consiste à réduire un sel de platine avec un agent réducteur.

Le sel de platine peut être un sel d'halogénure de platine, éventuellement hydraté, tel que H₂PtCl₆.6H₂O.

L'agent réducteur peut être un hydrure métallique, et plus particulièrement un borohydrure métallique, tel que le borohydrure de sodium (NaBH₄).

La préparation peut être effectuée dans un milieu du type émulsion « huile-dans-eau » (correspondant à la terminologie anglaise « water-in-oil »), l'huile pouvant correspondre à un composé hydrocarbure, tel que l'hexane.

D'un point de vue pratique, la préparation de particules de platine dans un tel milieu, avant la mise en contact avec le matériau carboné, peut se dérouler par la mise en oeuvre des opérations suivantes :
- une opération de mise en contact d'un sel de platine (par exemple, H₂PtCl₆-H₂0) préalablement dissous dans de l'eau avec un milieu comprenant une huile et éventuellement un agent dispersant ;
- une opération d'ajout au mélange résultant de l'opération précédente d'un agent réducteur, à l'issue de laquelle le mélange résultant est agité pendant une durée suffisante jusqu'à cessation de tout dégagement gazeux (cette cessation indiquant que la réaction de réduction est achevée), moyennant quoi l'on obtient un mélange comprenant des particules de platine.

Ce mélange comprenant des particules de platine est mis ensuite en contact avec le matériau carboné, de préférence sous ultrasons, moyennant quoi l'on obtient, à l'issue de cette opération de mise en contact, un mélange final comprenant des particules de platine liées au matériau carboné, lequel mélange peut être utilisé tel quel pour la mise en oeuvre de l'étape a) .

En variante, ce mélange final peut être traité (par exemple, par filtration) de sorte à isoler les particules de platine obtenues, ces dernières étant destinées à être utilisées pour la mise en oeuvre de l'étape a).

Selon une deuxième variante, lorsque les particules sont des particules métalliques, la préparation peut consister en une étape de réduction au moyen d'un agent réducteur d'un mélange comprenant un sel métallique et un matériau carboné, en faisant réagir celui-ci avec un agent réducteur, moyennant quoi l'on obtient des particules métalliques liées au matériau carboné.

Par exemple, lorsque les particules métalliques sont des particules de platine, l'étape de réduction consiste à réduire un sel de platine avec un agent réducteur.

Le sel de platine peut être un sel d'halogénure de platine, éventuellement hydraté, tel que H₂PtCl₆.6H₂O.

L'agent réducteur peut être un hydrure métallique, et plus particulièrement un borohydrure métallique, tel que le borohydrure de sodium (NaBH₄).

Encore plus spécifiquement, la préparation de particules de platine liées à un matériau carboné peut se dérouler par la mise en oeuvre des opérations suivantes :
- une opération de mise en contact d'une solution aqueuse basique (par exemple, à base de carbonate de lithium) d'un sel de platine (par exemple, H₂PtCl₆-H₂0) avec le matériau carboné ;
- une opération d'ajout au mélange résultant de l'opération précédente d'un agent réducteur, à l'issue de laquelle le mélange résultant est agité pendant une durée suffisante jusqu'à obtention d'un mélange comprenant des particules de platine liées au matériau carboné.

Ce mélange peut être traité (par exemple, par filtration) de sorte à isoler les particules de platine obtenues, ces dernières étant destinées à être utilisées pour la mise en oeuvre de l'étape a).

Selon un deuxième mode de réalisation, les particules peuvent être utilisées, lors de la mise en oeuvre de l'étape a), sous une forme non liée au matériau carboné, ce qui implique, dans ce cas, que le procédé de l'invention comprenne, après l'étape a) une étape de mise en contact des particules obtenues à l'issue de l'étape a) avec le matériau carboné (dite ci-après étape a'), moyennant quoi lesdites particules sont liées à l'issue de cette étape au matériau carboné.

Plus spécifiquement, cette étape de mise en contact avec le matériau carboné peut être réalisée sous ultrasons, de sorte à activer la collision des particules avec le matériau carboné pour former une liaison entre ces particules et le matériau.

Pour le premier mode de réalisation (c'est-à-dire le mode de réalisation, dans lequel les particules sont utilisées déjà liées à un matériau carboné avant la mise en oeuvre de l'étape a)), l'étape a) peut être réalisée par les opérations suivantes :
- une opération de mise en dispersion des particules dans un solvant organique électrophile, tel qu'un solvant amine (comme l'hexylamine), ce type de solvant contribuant à assurer une bonne stabilisation de la dispersion, moyennant quoi l'on obtient une dispersion de particules comprenant un matériau apte à catalyser l'oxydation de l'hydrogène ou la réduction de l'oxygène liées à un matériau carboné ;
- une opération de mise en contact de la dispersion susmentionnée avec un polymère tel que défini ci-dessus, de préférence préalablement dissous dans de l'eau ;
- éventuellement, une opération de lavage des particules obtenues, par exemple, par des cycles de précipitation/centrifugation, de sorte à éliminer les traces de composé amorceur n'ayant pas réagi.

Pour le deuxième mode de réalisation (c'est-à-dire le mode de réalisation, pour lequel le procédé de l'invention comprend, après l'étape a), une étape de mise en contact des particules obtenues à l'issue de l'étape a) avec le matériau carboné (dite ci-après étape a'), moyennant quoi lesdites particules sont liées à l'issue de cette étape au matériau carboné), le procédé de l'invention peut comprendre :
- une étape de préparation de particules comprenant un matériau apte à catalyser l'oxydation de l'hydrogène ou la réduction de l'oxygène ;
- une étape a), telle que définie ci-dessus, de mise en contact, dans le milieu de synthèse de l'étape précédente, d'un polymère tel que défini ci-dessus avec les particules obtenues préalablement ;
- une étape de mise en contact des particules issues de l'étape a) avec un matériau carboné, de sorte à obtenir des particules liées à un matériau carboné.

Lorsque les particules sont des particules métalliques, l'étape de préparation de ces dernières peut comprendre une opération de réduction d'un sel métallique en faisant réagir celui-ci avec un agent réducteur, moyennant quoi l'on obtient des particules métalliques.

Par exemple, lorsque les particules métalliques sont des particules de platine, l'étape de réduction consiste à réduire un sel de platine avec un agent réducteur.

Le sel de platine peut être un sel d'halogénure de platine, éventuellement hydraté, tel que H₂PtCl₆.6H₂O.

L'agent réducteur peut être un hydrure métallique, et plus particulièrement un borohydrure métallique, tel que le borohydrure de sodium (NaBH₄).

La préparation peut être effectuée dans un milieu du type émulsion « huile-dans-eau » (correspondant à la terminologie anglaise « water-in-oil »), l'huile pouvant correspondre à un composé hydrocarbure, tel que l'hexane.

D'un point de vue pratique, la préparation de particules de platine dans un tel milieu, avant la mise en contact le composé amorceur puis le matériau carboné, peut se dérouler par la mise en oeuvre des opérations suivantes :
- une opération de mise en contact d'un sel de platine (par exemple, H₂PtCl₆-H₂0) préalablement dissous dans de l'eau avec un milieu comprenant une huile et éventuellement un agent dispersant;
- une opération d'ajout au mélange résultant de l'opération précédente d'un agent réducteur, à l'issue de laquelle le mélange résultant est agité pendant une durée suffisante jusqu'à cessation de tout dégagement gazeux (cette cessation indiquant que la réaction de réduction est achevée), moyennant quoi l'on obtient un mélange comprenant des particules de platine.

L'étape a) de mise en contact peut se faire par introduction du polymère en milieu aqueux, de sorte à ne pas perturber le milieu de synthèse des particules.

L'étape de mise en contact avec le matériau carboné peut se faire par introduction de celui-ci directement dans le milieu de synthèse et soumission du mélange résultant à un traitement aux ultrasons, de sorte à engendrer la liaison du matériau carboné aux particules.

Ce mode de réalisation permet de réaliser une synthèse monotope de particules liées à un matériau carboné et greffées à des polymères tels que définis ci-dessus *via* des restes de composé amorceur d'une polymérisation ATRP.

Selon un troisième mode de réalisation, le procédé de l'invention comprend une étape de préparation des particules en un matériau apte à catalyser la réduction de l'oxygène ou l'oxydation de l'hydrogène liées à un matériau carboné, cette étape étant réalisée de façon concomitante à l'étape a).

Dans ce cas, lorsque les particules sont des particules métalliques, la préparation de ces dernières réalisées concomitamment à l'étape a) comprend :
- une étape de mise en contact d'un sel métallique, d'un matériau carboné, en milieu basique, avec un polymère tel que défini ci-dessus à l'étape a) ;
- une étape d'ajout au mélange résultant de l'étape précédente d'un agent réducteur, moyennant quoi il résulte des particules conformes à l'invention, à savoir des particules métalliques liées à un matériau carboné et à des polymères tels que définies ci-dessus ;
- éventuellement une étape d'isolement des particules ainsi obtenues.

Par exemple, lorsque les particules sont des particules de platine, la préparation de ces dernières réalisées concomittamment à l'étape a) comprend :
- une étape de mise en contact d'un sel de platine (par exemple, H₂PtCl₆-H₂0), d'un matériau carboné (tel que du noir de carbone) avec une solution aqueuse basique (par exemple, à base de carbonate de lithium) et avec un polymère tel que défini pour l'étape a) ;
- une étape d'ajout au mélange résultant de l'étape précédente d'un agent réducteur, à l'issue de laquelle le mélange résultant est agité pendant une durée suffisante jusqu'à obtention d'un mélange final comprenant des particules de platine liées au matériau carboné et au polymère susmentionné.

Selon ce troisième mode de réalisation, de façon tout à fait inattendue, la présence du polymère, dès le départ, ne modifie pas la réactivité du sel métallique ni le mécanisme de formation des particules, ce qui est particulièrement avantageux, car il peut être ainsi envisageable de fabriquer lesdites particules selon une méthode dite « one pot » (dite encore méthode monotope).

Quel que soit le mode de réalisation engagé, le taux de greffage de polymère(s) (exprimé en pourcentage massique de polymère dans les particules) peut aller de 1 à 25% massique, idéalement entre 2 et 15% massique.

Les particules susceptibles d'être obtenues par le procédé de l'invention, sont des particules comprenant un matériau apte à catalyser la réduction de l'oxygène ou l'oxydation de l'hydrogène, lesdites particules étant fonctionnalisées par des polymères comprenant au moins un motif répétitif porteur d'au moins un groupe conducteur de protons, ces polymères étant liés auxdites particules *via* un groupe espaceur, qui est un reste de composé amorceur d'une polymérisation ATRP lié de façon covalente auxdites particules (le reste correspondant au reste de composé amorceur, après que celui-ci a réagi d'une part, au moyen d'un de ses groupes, avec les particules pour former une liaison covalente et d'autre part au moyen d'un autre de ses groupes avec un monomère) moyennant quoi les polymères se trouvent liés de façon covalente au reste de composé amorceur et lesdites particules étant, en outre, liées, par exemple, de façon covalente, à un matériau carboné.

De telles particules sont particulièrement intéressantes, car elles permettent de transposer la phénoménologie du point triple à l'échelle moléculaire, le rôle du catalyseur étant rempli par le matériau constitutif de la particule en tant que telle, le rôle du conducteur protonique étant rempli par les polymères susmentionnés et le rôle du conducteur électronique étant rempli par le matériau carboné. Les liaisons covalentes entre le conducteur électronique et le catalyseur d'une part et entre le matériau conducteur protonique et le catalyseur d'autre part assurent, premièrement, un meilleur transfert des charges (respectivement, électrons et protons) et donc de meilleures performances et, deuxièmement, une parfaite stabilité en conditions de fonctionnement en pile, lorsque ces particules sont utilisées dans des piles. Ces deux résultats permettent de réduire le taux de chargement en catalyseur pour des performances accrues.

Comme déjà mentionné pour le procédé, les particules comprenant un matériau apte à catalyser la réduction de l'oxygène ou l'oxydation de l'hydrogène peuvent être des particules métalliques, à savoir des particules comprenant un ou plusieurs éléments métalliques (auquel cas, lorsqu'il y a plusieurs éléments métalliques, on pourra parler de particules en alliage(s) métallique(s).

Des particules métalliques particulièrement appropriées peuvent être des particules comprenant un métal noble, tel que le platine, le ruthénium, le palladium et des mélanges de ceux-ci.

Lorsque les particules obtenues selon l'invention sont destinées à être utilisées dans des piles PEMFC, les particules métalliques sont avantageusement des particules en platine.

Les restes de composé amorceur peuvent être des restes d'un composé amorceur tel que défini pour le procédé ci-dessus, en particulier, un composé comportant un groupe disulfure -S-S- formant pont entre deux parties de ce composé, au moins une de ces deux parties comportant un groupe phényle porteur d'un groupe amide -NH-CO-R¹, R¹ étant un groupe hydrocarboné porteur d'au moins un atome d'halogène (il s'entend, dans ce cas, que le groupe amide est lié à un atome de carbone du groupe phényle *via* l'atome d'azote du groupe -NH-).

Les polymères comprenant au moins un motif répétitif porteur d'au moins un groupe conducteur de protons sont similaires à ceux déjà décrits pour le procédé ci-dessus et peuvent être, en particulier, des polymères appartenant à la famille des polysulfones, polyéthercétones, polyphénylènes, polystyrènes, polymères aliphatiques fluorés, étant entendu que ces polymères doivent comporter des groupes conducteurs de protons, par exemple des groupes acide sulfonique, acide phosphonique ou acide carboxylique.

Quant au matériau carboné, lorsqu'il est présent, il peut être du graphite, du noir de carbone, des fibres de carbone, des tubes de carbone (tels que des nanotubes de carbone), du graphène.

A titre d'exemple, lorsque les particules sont des particules de platine, le composé amorceur est un composé de formule (I), le monomère est un monomère de formule (IV) et le matériau carboné est du noir de carbone, les particules résultantes sont des particules de platine, auxquelles sont liés de façon covalente, des restes du composé amorceur de formule suivante : 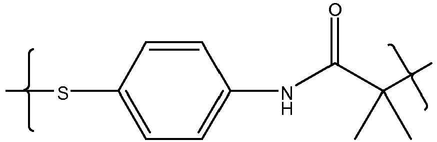 ce reste étant lié aux particules *via* l'atome de soufre, l'autre extrémité étant liée à des polymères comprenant un enchaînement de motifs répétitifs issus de la polymérisation du monomère de formule (IV). Les masses molaires moyennes en masse des polymères greffés à la surface des particules peuvent aller de 1000 à 1 000 000 g/mol, idéalement de 2000 à 200 000 g/mol.

Le rapport entre matériau carbone et platine peut être compris entre 80/20 et 20/80, idéalement entre 45/55 et 65/35.

Les particules de l'invention peuvent entrer dans la constitution d'électrodes de piles à combustible, en particulier de piles à combustibles du type PEMFC, plus particulièrement dans des couches catalytiques d'électrodes de piles à combustible.

Ces particules ne présentent aucun signe de dégradation en-dessous de 200°C. Par ailleurs, la tenue électrochimique de la couronne organique (constituée par les polymères greffés aux particules) a été démontrée dans une gamme de potentiels de 0 à 1 V vs ERH (ERH signifiant électrode réversible à dihydrogène), ce qui permet d'envisager d'utiliser ces particules comme catalyseurs pour les piles à combustible du type PEMFC.

Ces particules sont dispersables dans une solution alcoolique. Il est dès lors possible de les mélanger à un ionomère conducteur protonique dans des proportions allant de 100/0 à 70/30. La solution peut alors être déposée sur tout type de support poreux carboné (tissu ou feutre) et utilisé comme électrode de pile à combustible.

Les propriétés en pile (courbe courant/ tension) de ces particules sont supérieures à celles qui sont obtenues avec des électrodes équivalentes (même taux de charge en platine) obtenues par simple mélange de carbone platine et de polymère conducteur protonique.

Par ailleurs, ces particules présentent une activité électrocatalytique même lorsqu'elles sont mises en oeuvre sans ionomère de type Nafion. Ce résultat particulièrement remarquable permet de réaliser des électrodes sans Nafion. Associées à des membranes alternatives au Nafion, ces particules permettront de réaliser des assemblages membrane/électrode libre de tout Nafion.

Ainsi, les piles à combustible, par exemple du type PEMFC, comprennent, classiquement, au moins un assemblage électrode-membrane-électrode, dans lequel au moins une de ses électrodes est à base de particules conforme à l'invention.

La membrane quant à elle peut être à base d'un matériau polymérique conducteur de protons, le ou les polymères constitutifs de ce matériau pouvant être de même nature que le ou les polymères greffés à la surface desdites particules.

Parmi les composés amorceurs utilisés dans le cadre de cette invention, certains sont nouveaux, ces composés amorceurs étant des composés comportant un groupe disulfure -S-S- formant pont entre deux parties de ces composés, au moins une de ces deux parties comportant un groupe phényle porteur d'un groupe amide -NH-CO-R¹, R¹ étant un groupe hydrocarboné porteur d'au moins un atome d'halogène (il s'entend, dans ce cas, que le groupe amide est lié à un atome de carbone du groupe phényle *via* l'atome d'azote du groupe -NH-).

Les deux parties susmentionnées peuvent être identiques.

Un composé particulier répondant à la définition donnée ci-dessus peut être un composé de formule (I) ci-dessous :

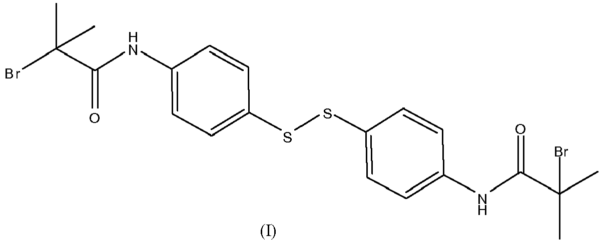

Parmi les polymères utilisés dans le cadre de l'étape a), certains également sont nouveaux, ces polymères comprenant :
- une groupe organique médian comportant un groupe disulfure -S-S- formant pont entre deux parties identiques, chacune de ces parties comportant un groupe phényle porteur d'un groupe amide -NH-CO-R^{'1}-, R'¹ étant un groupe hydrocarboné divalent ;
- deux chaînes polymériques comprenant au moins un motif répétitif porteur d'au moins un groupe conducteur de protons liées chacune au groupe organique médian *via* le groupe -R'¹-.

Schématiquement, ce type de polymères peut être représenté par la formule suivante : 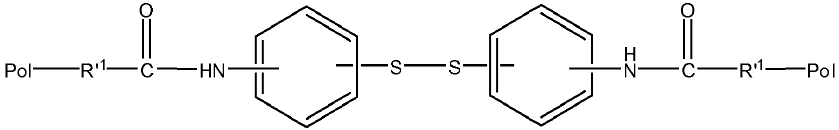 Pol correspondant à une chaîne polymérique.

Concernant les chaînes polymériques, le groupe conducteur de protons peut être un groupe acide sulfonique -SO₃H, un groupe acide carboxylique -CO₂H ou un groupe acide phosphonique -PO₃H₂, ces groupes pouvant être présents éventuellement sous forme de sels.

Les chaînes polymériques peuvent appartenir à la famille des polysulfones, polyéthercétones, polyphénylènes, polystyrènes, polymères aliphatiques fluorés, étant entendu que ces chaînes doivent comporter des groupes conducteurs de protons, par exemple des groupes acide sulfonique ou acide phosphonique.

En particulier, les chaînes polymériques peuvent être issues de la polymérisation d'un ou plusieurs monomères choisis parmi :
*des monomères éthyléniques porteurs d'au moins un groupe acide sulfonique, éventuellement sous forme d'un sel ;
*des monomères éthyléniques porteurs d'au moins un groupe acide carboxylique, éventuellement sous forme d'un sel ; et
*des monomères éthyléniques porteurs d'au moins un groupe acide phosphonique, éventuellement sous forme d'un sel.

Ces monomères peuvent être éventuellement fluorés.

Encore plus particulièrement, ces monomères peuvent répondre à la formule (III) suivante : 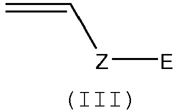 dans laquelle :
- Z correspond à un groupe phénylène ; et
- E correspond à un groupe conducteur de protons, éventuellement sous forme d'un sel, tel qu'un groupe acide sulfonique, un groupe acide phosphonique ou un groupe acide carboxylique.

Un monomère spécifique répondant à la définition donnée ci-dessus est un monomère acidestyrènesulfonique, par exemple sous forme d'un sel, tel qu'un sel de sodium (auquel cas, on pourra parler de styrènesulfonate de sodium).

Un exemple de ce type de monomère est un monomère de formule (IV) suivante : 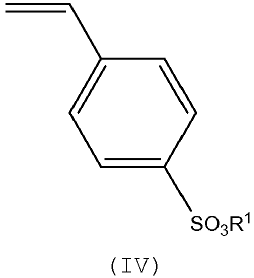 dans laquelle R¹ est un atome d'hydrogène ou un cation (par exemple, un cation de métal alcalin).

Un polymère spécifique conforme à cette définition peut être un polymère répondant à la formule (V) suivante : 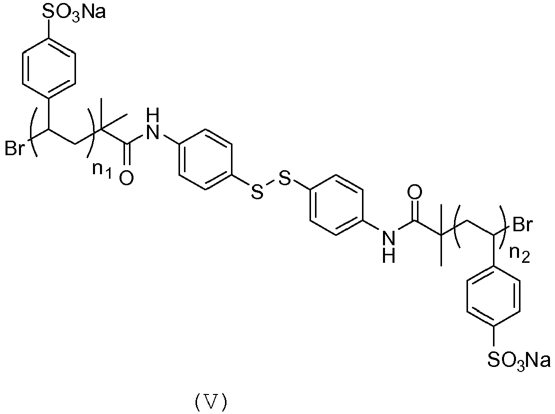 n₁ et n₂ correspondant au nombre de répétition du motif pris entre parenthèses.

L'invention va être à présent décrite, par rapport aux exemples suivants donnés à titre illustratif et non limitatif.

### EXPOSÉ DÉTAILLÉ DE MODES DE RÉALISATION PARTICULIERS

### EXEMPLE 1

Cet exemple illustre la préparation du composé 2-bromo-N-{4-[4-(2-bromo-2-méthylpropionylamino)-phényldisulfanyl]-phényl}-2-méthylpropionamide de formule (I) suivante : 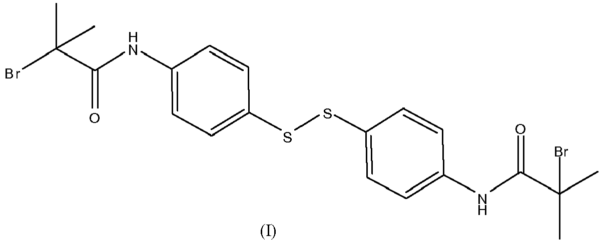 selon le schéma réactionnel suivant :

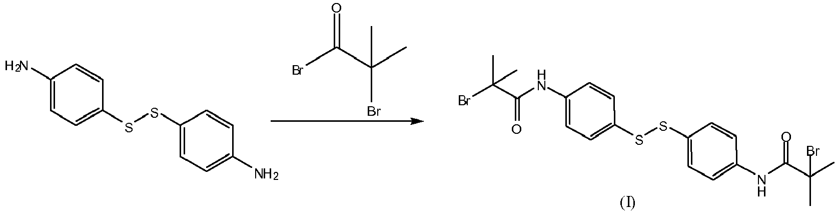

Pour ce faire, dans un ballon muni d'un barreau aimanté, du 4-aminophényle disulfure (248 mg ; 1 mmol ; 1 éq.) et de la bipyridine (343,6 mg ; 2,2 mmol ; 2,2 éq.) sont dissous dans du chloroforme (10 mL). Le mélange réactionnel est refroidi en plaçant le ballon dans un bain à 0°C. Du bromoisobutyrate (272 µL ; 2,2 éq.) est ajouté goutte-à-goutte au mélange ainsi refroidi. Le mélange résultant est agité pendant 10 heures puis on laisse la température remonter à la température ambiante. De l'eau (10 mL) est versée dans le ballon et le mélange résultant est ensuite transféré dans une ampoule à décanter, de sorte à séparer une phase aqueuse et une phase organique.

La phase aqueuse est lavée avec du dichlorométhane, moyennant quoi on isole une autre phase organique.

Les phases organiques sont réunies puis séchées avec du sulfate de magnésium (MgSO₄) puis filtrées. La phase résultante est ensuite évaporée sous vide à l'évaporateur rotatif, de sorte à éliminer les solvants organiques. Le produit résultant est purifié sur une colonne chromatographique sur gel de silice avec, dans un premier temps, du dichlorométhane comme éluant puis, dans un deuxième temps, un mélange dichlorométhane/méthanol comme éluant (90/10).

Le produit résultant (avec un rendement de 92%) correspond au produit attendu de formule (I) ci-dessus selon les analyses de spectroscopie RMN ¹H, de spectroscopie RMN ¹³C, de spectroscopie IR et d'analyse élémentaire, dont les résultats figurent ci-dessous.
**RMN ¹H** (200,13 MHz, CDCl₃) δ: 8,47 (s, 1H, NH), 7,56-7,42 (m, 4H, Hₐᵣₒₘ), 2,04 (s, 6H, CH₃) ppm.
**RMN ¹³C (200,13 MHz, CDCl₃)** δ: 170,1 (C=O), 137,2 (NH-*Cₐᵣₒₘ*), 132,9 (S-*Cₐᵣₒₘ*), 130,1 (HN-Cₐᵣₒₘ-CHₐᵣₒₘ-*C*Hₐᵣₒₘ-S), 120,6 (H₂N-Cₐᵣₒₘ-CHₐᵣₒₘ-CHₐᵣₒₘ-S), 63, 1 (Br-C-(CH₃)₂, 32,6 (*C*H₃) ppm.
**IR (cm⁻¹) :** 3300 (N-H), 1615 (C=O), 1086 (C-S), 570 (C-Br).
**Analyse élémentaire (en %) :** (C₂₀H₂₂Br₂N₂O₂S₂), C: 42,5; H: 4,2; Br:30; N: 4,3; O: 7,9; S: 11,1.

### EXEMPLE 2

Cet exemple illustre la préparation d'un polymère pouvant être schématisé par la formule suivante ci-dessous : 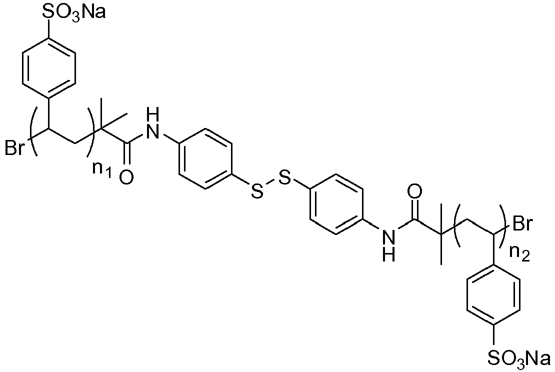 avec n₁ et n₂ correspondant au nombre de répétition du motif pris entre parenthèses,
cette polymérisation étant effectuée selon le schéma réactionnel suivant :

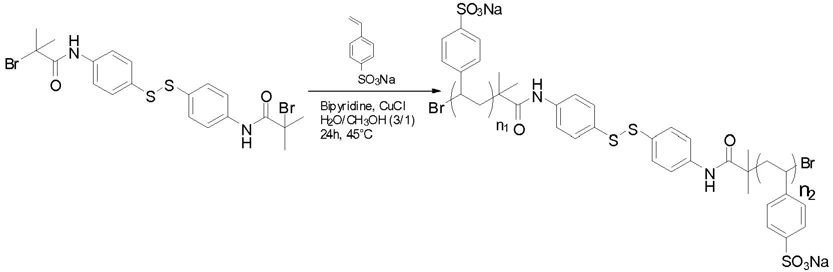

Dans un bicol muni d'un barreau aimanté préalablement séché par des cycles vide/argon, du styrène sulfonate de sodium est dissous (cf. les quantités indiqués dans le tableau 1 selon les différents essais réalisés) dans un mélange eau/méthanol (3/1) sous flux d'argon. De la bipyridine (115 mg, 0,73 mmol, 8 éq.) et du chlorure de cuivre (36,4 mg, 0,37 mmol, 4 éq.) sont ensuite additionnés.

Enfin sous argon, le composé amorceur préparé à l'exemple 1 (50 mg, 0,1 mmol, 1 éq.) est ajouté au mélange réactionnel. La réaction de polymérisation est conduite pendant 20 h à 45°C sous flux d'argon. La réaction est stoppée par une mise à l'air du ballon. Le mélange réactionnel est tout d'abord filtré sur silice afin d'éliminer le chlorure de cuivre. Puis le polymère est isolé en éliminant l'eau à l'évaporateur rotatif sous vide. Le polymère est ensuite précipité dans un mélange acétone/méthanol, filtré puis séché à l'étuve.

Le Tableau 1 récapitule les quantités de matière et les rendements obtenus en fonction des masses molaires de polymère visées.

**Tableau 1**

| Masse molaire visée (g.mol-1) | Masse de monomère (g) | Nombre de moles de monomère (mmol) | Nombre d'équivalents de monomère | Conver sion (%) |
|---|---|---|---|---|
| 10 000 | 0,8 | 4,2 | 46 | 98 |
| 50 000 | 4,3 | 21 | 230 | 92 |
| 100 000 | 8,7 | 42 | 460 | 98 |

Le polymère résultant correspond au produit attendu de formule selon les analyses RMN ¹H, RMN ¹³C, de spectroscopie IR et d'analyse élémentaire, dont les résultats figurent ci-dessous.
**RMN ¹H** (200,13 MHz, CDCl₃) δ: 8-7,2 (m, Hₐᵣₒₘ), 7-6 (m, Hₐᵣₒₘ), 1-2 (m, CH₃ et CH₂) ppm
**IR (cm**⁻**¹)** : 3300 (N-H), 1650 (C=Carom), 1550 (C=O), 1086 (C-S), 570 (C-Br) cm⁻¹
**Analyse élémentaire:** C: 39,4 ; H: 4,3; Br:21; N: 3,8; O: 10,3; S: 15,1; Na: 6,1.

### EXEMPLE 3

Cet exemple illustre la préparation de particules de platine liées à un matériau carboné du type noir de carbone (dénommé, dans la formule ci-dessous "Vulcan XC72"), réprésentées par la formule ci-dessous: 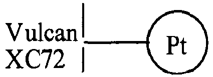 par une méthode impliquant une microémulstion dite "eau-dans-huile".

Cette préparation est menée, en parallèle, dans deux réacteurs séparés. Dans chaque réacteur, on verse de l'heptane (18,71 g ; 186,6 mmol) et du Brij® 30 (5,30 g ; 14,62 mmol). En parallèle, un sel de platine hexahydraté H₂PtCl₆.6H₂O (275 mg ; 0,212 mmol, 1 éq:) est dissous dans 2,5 mL d'eau milliQ. On ajoute, dans chaque réacteur, 1 mL de la solution de sel métallique puis on agite l'ensemble de sorte à former une microémulsion. Le mélange résultant est laissé au repos pendant une durée allant de 15 à 20 minutes. Du borohydrure de sodium (116 mg ; 3,1 mmol; 15 éq.) est ajouté par moitié dans chaque réacteur. Le mélange passe de l'orange au noir intense. Après agitation, on ajoute l'autre partie du borohydrure de sodium. Le mélange résultant est agité manuellement puis laissé au repos pendant 30 minutes. La réaction de réduction est considérée comme achevée, dès lors qu'il n'y a plus de dégagement gazeux. Le contenu des deux réacteurs est réuni dans un bécher, ce dernier étant recouvert de papier aluminium puis placé dans un bain à ultrasons pendant 10 minutes. Du noir de carbone Vulcan®XC 72 (120 mg) est ajouté dans le bécher. Ce dernier est replacé dans un bain à ultrasons pendant 30 minutes. Une fois le bécher retiré du bain à ultrasons, de l'acétone est ajouté (1 volume d'acétone pour un volume de microémulsion). Le mélange est laissé au repos quelques minutes puis est filtré sur une membrane en polyfluorure de vinylidène (PVDF) hydrophile Durapore (0,22 µm; GVWP 04700) sous vide. Les particules de platine supportées sur le matériau carboné (le noir de carbone) sont lavées par filtration par cycles de 3*30 mL d'acétone, 3*30 mL d'un mélange acétone/eau (50/50), 3*30 mL d'eau dans un premier temps puis, dans un deuxième temps, par des séries (au moins trois) de 2*30 mL d'acétone, 1*30 mL d'un mélange acétone/eau (50/50) et 2*30 mL d'eau. Les particules obtenues sont alors placées une nuit à l'étuve à une température de 75°C.

Le rendement est quantitatif.

Les particules obtenues sont analysées par analyse élémentaire attestant de la présence de carbone (à hauteur de 60%) et de platine (à hauteur de 40%), ce qui démontre que les particules de platine sont supportées sur le matériau carboné.

### EXEMPLE 4

Cet exemple illustre la préparation de particules de platine liées à un matériau carboné du type noir de carbone (dénommé, dans la formule ci-dessous "Vulcan CX 72") par une méthode dite "méthode instantannée" (ou en terminologie anglaise "Instant method"), ces particules pouvant être représentées par la formule ci-dessous:

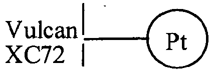

Pour ce faire, du sel de platine hexahydraté H₂PtCl₆.6H₂O (259 mg; 0,50 mmol; 1 éq.) est dissous dans 10 mL d'eau milliQ, moyennant quoi l'on obtient une solution de sel métallique. En parallèle, dans un ballon de 100 mL muni d'un barreau aimanté, du carbonate de lithium (111 mg; 1,5 mmol; 3 éq.) est dissous dans 30 mL d'eau milliQ. Du matériau carboné Vulcan®XC72 (146 mg) (correspondant à du noir de carbone) est introduit dans le ballon suivi de la solution de sel métallique. Pour obtenir une concentration finale en métal de 10 mmol.L⁻¹, 10 mL d'eau sont additionnés. Le pH du mélange est ajusté à une valeur de 9-10 par ajout de carbonate de lithium. Le mélange réactionnel est agité à 500 tours/min pendant 6 heures à 60°C. Après 6 heures de réaction, les particules d'oxyde de platine obtenues sont réduites par ajout d'une solution froide à 100 mmol.L⁻¹ de borohydrure de sodium (NaBH₄) (19 mg; 0,5 mmol; 1 éq.). L'étape de réduction est réalisée sous flux contrôlé à l'aide d'une pompe, dont le débit est fixé à 0,15 mL.min⁻¹. Une fois revenu à température ambiante, le mélange réactionnel est filtré sous vide puis lavé trois fois avec de l'eau milliQ. Des particules sont récupérées par filtration puis sont séchées une nuit à l'étuve à 75°C.

Le rendement est quantitatif.

Les particules obtenues sont analysées par analyse élémentaire attestant de la présence de carbone (à hauteur de 60%) et de platine (à hauteur de 40%), ce qui démontre que les particules de platine sont supportées sur le matériau carboné.

### EXEMPLE 5

Cet exemple illustre la préparation de particules de platine préparées selon les exemples précédents greffées par le polymère préparé à l'exemple 2, ces particules greffées pouvant être schématisées par la formule ci-dessous: 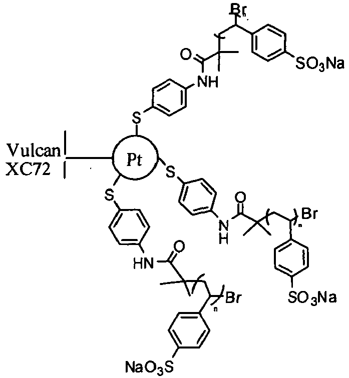 n indiquant le nombre de répétition du motif pris entre parenthèses.

Dans un ballon muni d'un barreau aimanté, les particules de platine (les quantités utilisées selon les différents essais étant explicitées dans le tableau 2 ci-dessous) sont mises en suspension dans 10 mL d'hexylamine. Le ballon est placé 30 minutes dans un bain à ultrasons, afin que la suspension de particules soit homogène. Le polystyrène sulfonate de sodium obtenu à l'exemple 2 est dissous dans l'eau puis ajouté. Le mélange réactionnel est agité pendant 12 heures. Les particules de platine modifiées sont ensuite lavées et récupérées par des cycles de précipitation/centrifugation, puis séchées une nuit à l'étuve à 75°C.

**Tableau 2**

| | | | |
|---|---|---|---|
| Particules (mg) | 95 | 90 | 85 |
| Polymère (mg) | 10 | 20 | 30 |
| % massique de polymère greffé | 5 | 10 | 15 |

### EXEMPLE 6

Cet exemple illustre la préparation de particules de platine supportées sur un matériau carboné et greffées par un polymère obtenu conformément à l'exemple 2, le greffage en tant que tel étant réalisé dans le milieu de synthèse des particules de platine supportées.

Les particules ainsi obtenues peuvent être schématisées par la même formule que celle représentée à l'exemple 5.

Le schéma réactionnel peut être schématisé de la façon suivante:

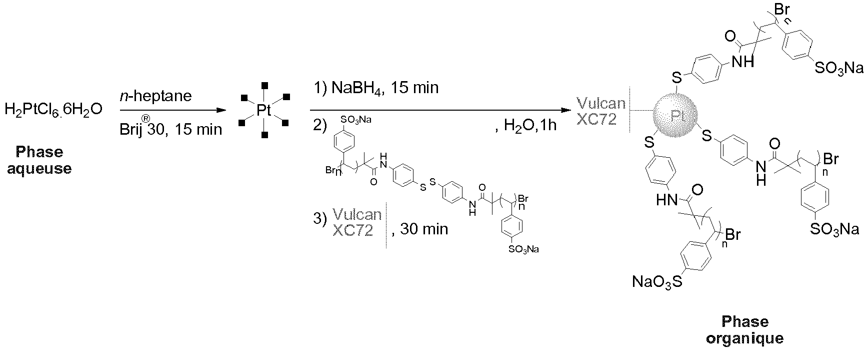

Pour ce faire, cette préparation est menée, en parallèle, dans deux réacteurs séparés. Dans chaque réacteur, on verse de l'heptane (18,71 g ; 186,6 mmol) et du Brij® 30 (5,30 g ; 14,62 mmol). En parallèle, un sel de platine hexahydraté H₂PtCl₆.6H₂O (275 mg ; 0,212 mmol, 1 éq) est dissous dans 2,5 mL d'eau milliQ. On ajoute, dans chaque réacteur, 1 mL de la solution de sel métallique puis on agite l'ensemble de sorte à former une microémulsion. Le mélange résultant est laissé au repos pendant une durée allant de 15 à 20 minutes. Du borohydrure de sodium (116 mg ; 3,1 mmol; 15 éq.) est ajouté par moitié dans chaque réacteur. Le mélange passe de l'orange au noir intense. Après agitation, on ajoute l'autre partie du borohydrure de sodium. Le mélange résultant est agité manuellement puis laissé au repos pendant 30 minutes. La réaction de réduction est considérée comme achevée, dès lors qu'il n'y a plus de dégagement gazeux. Le polymère préparé à l'exemple 2 préalablement dissous est ajouté dans chaque réacteur. Les réacteurs sont placés sous agitation pendant 1 heure. Le contenu des deux réacteurs est ensuite réuni dans un bécher, ce dernier étant recouvert de papier aluminium puis placé dans un bain à ultrasons pendant 10 minutes. Du noir de carbone Vulcan®XC 72 est ajouté dans le bécher. Ce dernier est remis au bain à ultrasons pendant 30 minutes. Une fois le bécher retiré du bain à ultrasons, de l'acétone est ajouté (1 volume d'acétone pour un volume de microémulsion). Le mélange est laissé au repos quelques minutes puis est filtré sur une membrane en polyfluorure de vinylidène (PVDF) hydrophile Durapore (0,22 µm; GVWP 04700) sous vide. Les particules de platine supportées sur le matériau carboné (le noir de carbone) sont lavées par filtration par cycles de 3*30 mL d'acétone, 3*30 mL d'un mélange acétone/eau (50/50), 3*30 mL d'eau dans un premier temps puis, dans un deuxième temps, par des séries (au moins trois) de 2*30 mL d'acétone, 1*30 mL d'un mélange acétone/eau (50/50) et 2*30 mL d'eau. Les particules obtenues sont alors placées une nuit à l'étuve à 130°C, afin d'éliminer toutes les traces de Brij^{®}30.

Différents essais ont été mis en oeuvre avec différentes quantités de particules et de polymère, ces quantités étant reportées dans le tableau 3 ci-dessous.

**Tableau 3**

| | | | |
|---|---|---|---|
| Particule (mg) | 110 | 100 | 90 |
| Polymère (mg) | 20 | 40 | 60 |
| % massique de polymère greffé | 5 | 10 | 15 |

### EXEMPLE 7

Cet exemple illustre la préparation de particules de platine supportées sur un matériau carboné et greffées par un polymère obtenu conformément à l'exemple 2, le greffage étant réalisé de façon concomitante à la synthèse des particules.

Le schéma réactionnel peut être schématisé de la façon suivante:

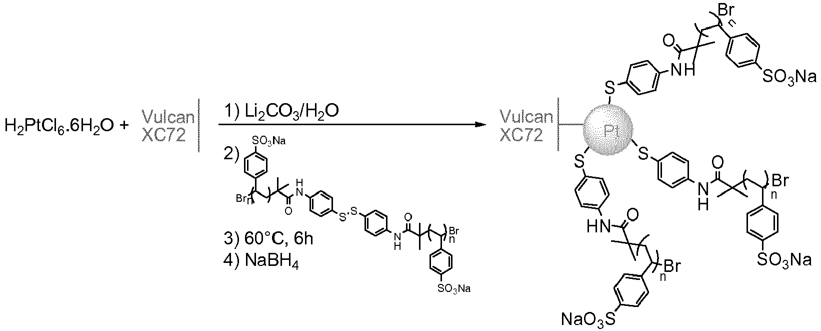

Pour ce faire, du sel de platine hexahydraté H₂PtCl₆.6H₂O (259 mg; 0,50 mmol; 1 éq.) est dissous dans 10 mL d'eau milliQ, moyennant quoi l'on obtient une solution de sel métallique. En parallèle, dans un ballon de 100 mL muni d'un barreau aimanté, du carbonate de lithium (111 mg; 1,5 mmol; 3 éq.) est dissous dans 30 mL d'eau milliQ. Du matériau carboné Vulcan®XC72 (146 mg) est introduit dans le ballon suivi de la solution de sel métallique et du polymère préparé à l'exemple 2 dissous dans l'eau. Pour obtenir une concentration finale en métal de 10 mmol.L⁻¹, 10 mL d'eau sont additionnés. Le pH du mélange est ajusté à une valeur de 9-10 par ajout de carbonate de lithium.

Le mélange réactionnel est agité à 500 tours/min pendant 6 heures à 60°C. Après 6 heures de réaction, la réduction est réalisée avec une solution froide à 100 mmol.L⁻¹ de borohydrure de sodium (NaBH₄) (19 mg; 0,5 mmol; 1 éq.). L'étape de réduction est réalisée sous flux contrôlé à l'aide d'une pompe, dont le débit est fixé à 0,15 mL.min⁻¹. Une fois revenue à température ambiante, le mélange réactionnel est filtrée sous vide puis lavée trois fois avec de l'eau milliQ. Des particules sont récupérées par filtration puis sont séchées une nuit à l'étuve à 75°C.

Différents essais ont été réalisés en faisant varier les quantités de polymère, ces quantités étant reportées sur le tableau 4 ci-dessous.

**Tableau 4**

| | | | |
|---|---|---|---|
| Polymère (mg) | 20 | 40 | 60 |
| % massique de polymère greffé | 5 | 10 | 15 |

### EXEMPLE 8

Les particules obtenues selon l'exemple 6 sont soumises à différentes analyses de sorte à analyser:
- la tenue thermique de ces particules ;
- la caractérisation structurale de ces particules ;
- la caractérisation électrochimique de ces particules ; et
- le test en pile des particules.

### a) Tenue thermique

L'analyse thermogravimétrique permet de mettre en évidence la stabilité thermique des particules. L'analyse est réalisée sous air, avec une variation de la température de 25°C à 800°C.

L'analyse met en évidence que, jusqu'à 300°C, aucune dégradation n'est visible, ce qui permet d'envisager l'utilisation des particules.

### b) Caractérisation structurale de ces particules

La caractérisation des particules par microscopie électronique en transmission permet d'avoir une image représentative de ces particules à différentes échelles. Les clichés obtenus mettent en avant, d'une part, la répartition des nanoparticules de platine sur le matériau carboné, et, d'autre part, la présence de la couronne organique greffée constituée par les polymères greffés aux particules.

Les images sont réalisées après le traitement thermique des particules pour s'assurer que ce qui est visible en microscopie soit bien du polymère et non du Brij^{®}30.

Les clichés obtenus mettent en avant une bonne dissémination des nanoparticules de platine sur le support carboné, ce qui démontre que la présence de la couronne organique ne limite pas cette étape de formation des nanoparticules de platine au cours de la synthèse microémulsion «eau-dans-huile». Plus le grossissement augmente, plus une image précise du greffage du polystyrène sulfonate de sodium peut être obtenue. D'ailleurs, à partir d'un grossissement égal à 600 000, la présence de la couronne organique est visible. Il apparaît nettement que le polymère enrobe les nanoparticules de platine.

### c) Caractérisation électrochimique des particules

La caractérisation de la tenue de la couronne organique a été réalisée en milieu support (argon) avec une cellule à trois électrodes. Dans cette cellule, l'électrode de référence est une électrode réversible à dihydrogène (ERH) dont le potentiel électrochimique est fixé et connu. La seconde électrode est une électrode auxiliaire appelée contre électrode (CE) constituée d'un matériau inerte, une plaque de carbone vitreux dans notre cas, et qui sert à la collection du courant. La troisième électrode est une électrode de travail (ET) sur laquelle se trouve le catalyseur étudié. Un système d'entrée et de sortie de gaz (AG/SG) est ajouté afin de travailler en atmosphère contrôlée. La mesure s'effectue par cyclage du potentiel d'électrode entre 0,05 V vs ERH et une limite supérieure de potentiel successivement égale à 0,55 V vs ERH (seuls les phénomènes faradiques d'adsorption/désorption d'hydrogène se produisent sur cette gamme de potentiel, les courants enregistrés entre 0,4 V et 0,55 V vs ERH étant dû au phénomène de capacité de double couche), 0,8 V vs ERH (potentiel situé juste avant le début de la réaction d'oxydation de la surface de platine), 1,0 V vs ERH (potentiel situé après le début de la réaction d'oxydation de la surface de platine, et correspondant au potentiel de la cathode d'une PEMFC à circuit ouvert) et 1,2 V vs ERH (potentiel fortement oxydant).

Lors des balayages successifs en passant par des potentiels d'électrode supérieurs à 1,0 V vs ERH, les courants observés dans la zone d'adsorption/désorption augmentent jusqu'à obtenir les valeurs de courant enregistrées sur une électrode du type Vulcan XC72/Pt. Cette observation suggère que la couronne organique qui entoure le platine est dégradée lorsque le potentiel appliqué est supérieur à 1,0 V vs ERH. Inversement, lorsque les balayages successifs ne dépassent pas 1V vs ERH, les courants enregistrés sont stables et caractéristiques d'une surface de platine modifiée, ce qui confirme la présence, après plusieurs cycles, de la couronne organique.

L'activité catalytique et la sélectivité sont des propriétés importantes dans le choix du catalyseur.

La caractérisation des matériaux en milieu acide saturé en oxygène permet d'étudier leur comportement catalytique vis-à-vis de la réaction de réduction de l'oxygène. L'allure des voltammogrammes est équivalente à celle obtenue pour des catalyseurs du type Vulcan XC72/Pt. Pour tous les matériaux caractérisés, le nombre total d'électrons échangés est égal à 4 entre 0,7 et 0,4 V vs ERH. La réduction de l'oxygène est donc complète pour former de l'eau.

La sélectivité, quant à elle, définit la capacité d'un catalyseur à transformer des réactifs précis en un produit donné. Dans le cas de la réaction de réduction de l'oxygène, deux produits peuvent être formés : l'eau et le peroxyde d'hydrogène.

Dans la mesure où l'application visée pour les catalyseurs étudiés est leur incorporation à une cathode de pile à combustible pour des applications « transports » ou des « systèmes portables », donc nécessitant une durée de vie longue (environ 5000 heures pour l'application « transport ») ou fonctionnant à proximité d'êtres humains, la sélectivité apparaît comme un facteur déterminant pour des raisons de durabilité des systèmes et de sécurité. En effet, l'eau oxygénée est un produit oxydant qui pourrait à terme provoquer des irritations de la peau ou des yeux.

De plus, la production de peroxyde d'hydrogène à partir de l'oxygène est réalisée par l'échange de deux électrons contre quatre électrons échangés pour produire de l'eau. Ainsi, la réduction de l'oxygène en peroxyde d'hydrogène conduit à la consommation d'une quantité deux fois plus importante d'oxygène par rapport à la réaction de réduction de l'oxygène en eau pour une puissance de fonctionnement de pile donnée. Si la pile est alimentée par l'air ambiant, la diffusion de l'oxygène depuis le milieu ambiant jusqu'à la couche catalytique peut devenir un facteur limitant pour le fonctionnement de la pile. Il convient donc de le consommer par une réaction impliquant le plus grand nombre d'électrons échangés. Pour l'élaboration d'une pile à combustible, la sélectivité du catalyseur cathodique utilisé doit donc être déterminée avec précision.

Le calcul des proportions d'eau et de peroxyde produits lors de la réaction permet de déterminer le mécanisme. Le peroxyde d'hydrogène n'est produit qu'à partir de 0,8 V vs ERH. Cela implique une réduction directe de l'oxygène en eau dans la gamme de potentiel allant de 1,1 à 0,8 V vs ERH. Pour des potentiels inférieurs, la proportion de peroxyde s'élève jusqu'à 5 %, ce qui est tout à fait compatible avec une utilisation en pile.

### d) Test en pile

Les tests en pile sont réalisés avec une membrane Nafion NR212, dans différentes conditions afin d'observer l'effet de la couronne organique à la surface des nanoparticules de platine.

Les courbes de polarisation obtenues mettent en évidence que, pour les faibles densités de courant, la présence du polymère à la surface des nanoparticules de platine améliore les performances catalytiques du matériau. Par exemple à 0,2 A.cm⁻², la tension obtenue pour les matériaux catalytiques de l'invention est égale à 0,77 V dans le cas où il y a 10 % de Nafion^{®} dans l'encre catalytique et égale à 0,75 V dans le cas où il n'y a pas de Nafion^{®}. Pour un catalyseur de type Vulcan XC72/Pt synthétisé par la méthode microémulsion « eau-dans-huile », à cette densité de courant, la tension est de 0,73 V.

Lorsque la cathode ne contient pas de Nafion^{®}, des valeurs de densité de courant supérieures à 0,8 A cm⁻² ont pu être appliquées au système pile. Ceci confirme que la conduction protonique est apportée par le polymère greffé à la surface des nanoparticules de platine et la validité de la transposition de la problématique du point triple au niveau moléculaire. De la même manière, les performances de la pile augmentent avec le taux de Nafion^{®} jusqu'à 10%, puis diminuent pour des teneurs plus élevées. La présence du polymère greffé à la surface des nanoparticules de platine permet de diminuer les quantités de Nafion^{®} à introduire dans la formulation de l'encre catalytique pour optimiser les performances.

## Revendications

1. Procédé de préparation de particules comprenant un matériau apte à catalyser la réduction de l'oxygène ou l'oxydation de l'hydrogène, lesdites particules étant fonctionnalisées par des polymères comprenant au moins un motif répétitif porteur d'au moins un groupe conducteur de protons et lesdites particules étant liées par covalence à un matériau carboné, ledit procédé comprenant une étape a) de mise en contact de particules comprenant un matériau apte à catalyser la réduction de l'oxygène ou l'oxydation de l'hydrogène avec un polymère comprenant au moins un motif répétitif porteur d'au moins un groupe conducteur de protons et comprenant au moins une partie correspondant à un reste organique d'un composé amorceur d'une polymérisation du type ATRP, ledit reste comprenant au moins un groupe apte à se greffer à la surface desdites particules, moyennant quoi l'on obtient des particules greffées par des polymères comprenant au moins un motif répétitif porteur d'au moins un groupe conducteur de protons.

2. Procédé selon la revendication 1, dans lequel les particules sont des particules métalliques.

3. Procédé selon la revendication 1 ou 2, dans lequel les particules métalliques sont des particules comprenant un métal noble, tel que le platine, le ruthénium, le palladium et des mélanges de ceux-ci.

4. Procédé selon l'une quelconque des revendications précédentes, dans lequel le reste organique de composé amorceur est un reste issu d'un composé organique halogénure comportant au moins un groupe choisi parmi -S-S- et -SH, -S-S- étant un groupe disulfure divalent.

5. Procédé selon l'une quelconque des revendications précédentes, dans lequel le reste organique de composé amorceur est un reste d'un composé comportant un groupe disulfure -S-S- formant pont entre deux parties de ce composé, au moins une de ces deux parties comportant un groupe phényle porteur d'un groupe amide -NH-CO-R¹, R¹ étant un groupe hydrocarboné porteur d'au moins un atome d'halogène.

6. Procédé selon l'une quelconque des revendications précédentes, dans lequel le polymère appartient à la famille des polysulfones, polyéthercétones, polyphénylènes, polystyrènes, polymères aliphatiques fluorés, étant entendu que ces polymères doivent comporter des groupes conducteurs de protons.

7. Procédé selon l'une quelconque des revendications précédentes, dans lequel le polymère est issu de la polymérisation d'au moins un monomère de formule (III) suivante : 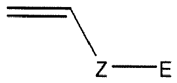 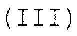 dans laquelle :
- Z correspond à un groupe phénylène ; et
- E correspond à un groupe conducteur de protons, éventuellement sous forme d'un sel,
en présence d'un composé amorceur de formule (I) susmentionnée.

8. Procédé selon l'une quelconque des revendications précédentes, comprenant, en outre, avant l'étape a), une étape de préparation du polymère tel que défini à la revendication 1.

9. Procédé selon la revendication 1, dans lequel le matériau carboné est choisi parmi le graphite, le noir de carbone, les fibres de carbone, les tubes de carbone, le graphène et les mélanges de ceux-ci.

10. Procédé selon la revendication 1 ou 9, comprenant, en outre, avant l'étape a), une étape de préparation de particules comprenant un matériau apte à catalyser la réduction de l'oxygène ou l'oxydation de l'hydrogène liées à un matériau carboné.

11. Procédé selon la revendication 1 ou 9, comprenant, après l'étape a), une étape de mise en contact des particules obtenues à l'issue de l'étape a) avec le matériau carboné, moyennant quoi lesdites particules sont liées, à l'issue de cette étape de mise en contact, au matériau carboné.

12. Procédé selon la revendication 1 ou 9, comprenant une étape de préparation de particules comprenant un matériau apte à catalyser la réduction de l'oxygène ou l'oxydation de l'hydrogène liées à un matériau carboné, cette étape étant réalisée de façon concomitante à l'étape a).

13. Polymère comprenant :
- une groupe organique médian comportant un groupe disulfure -S-S- formant pont entre deux parties identiques, chacune de ces parties comportant un groupe phényle porteur d'un groupe amide -NH-CO-R'¹-, R'¹ étant un groupe hydrocarboné divalent ;
- deux chaînes polymériques comprenant au moins un motif répétitif porteur d'au moins un groupe conducteur de protons liées chacune au groupe organique médian *via* le groupe -R'¹-.

14. Polymère selon la revendication 13, dans lequel le groupe conducteur de protons est un groupe acide sulfonique -SO₃H, un groupe acide carboxylique -CO₂H ou un groupe acide phosphonique -PO₃H₂, ces groupes pouvant être présents éventuellement sous forme de sels.

15. Polymère selon la revendication 13 ou 14, dans lequel les chaînes polymériques appartiennent à la famille des polysulfones, polyéthercétones, polyphénylènes, polystyrènes, polymères aliphatiques fluorés, étant entendu que ces chaînes doivent comporter des groupes conducteur de protons.

16. Polymère selon la revendication 13 ou 14, dans lequel les chaînes polymériques sont issues de la polymérisation d'au moins un monomère de formule (III) suivante : 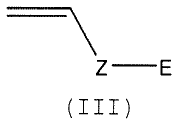 dans laquelle :
- Z correspond à un groupe phénylène ; et
- E correspond à un groupe conducteur de protons, éventuellement sous forme d'un sel.

## Patentansprüche

1. Verfahren zur Herstellung von Partikeln, umfassend ein Material, das dazu ausgelegt ist, die Reduktion von Sauerstoff oder die Oxidation von Wasserstoff zu katalysieren, wobei die Partikel durch Polymere funktionalisiert sind, die wenigstens ein sich wiederholendes Motiv umfassen, welches Träger wenigstens einer protonenleitenden Gruppe ist, und wobei die Partikel kovalent an ein Kohlenstoffmaterial gebunden sind, wobei das Verfahren einen Schritt a) des Inkontaktbringens von Partikeln, umfassend ein Material, das dazu ausgelegt ist, die Reduktion von Wasserstoff oder die Oxidation von Sauerstoff zu katalysieren, mit einem Polymer umfasst, welches wenigstens ein sich wiederholendes Motiv umfasst, das Träger wenigstens einer protonenleitenden Gruppe ist und wenigstens einen Teil umfasst, der einem organischen Rest einer Initiatorverbindung für eine Polymerisation vom Typ ATRP entspricht, wobei der Rest wenigstens eine Gruppe umfasst, die dazu ausgelegt ist, sich an die Oberfläche der Partikel zu pfropfen, wodurch man Partikel erhält, die mit Polymeren gepfropft sind, welche wenigstens ein sich wiederholendes Motiv umfassen, das Träger wenigstens einer protonenleitenden Gruppe ist.

2. Verfahren nach Anspruch 1, bei dem die Partikel Metallpartikel sind.

3. Verfahren nach Anspruch 1 oder 2, bei dem die Metallpartikel Partikel sind, die ein Edelmetall umfassen, wie zum Beispiel Platin, Ruthenium, Palladium und deren Mischungen.

4. Verfahren nach einem der vorhergehenden Ansprüche, bei dem der organische Rest der Initiatorverbindung ein Rest ist, der aus einer organischen Halogenidverbindung hervorgegangen ist, umfassend wenigstens eine Gruppe ausgewählt aus -S-S- und -SH, wobei -S-S- eine divalente Disulfidgruppe ist.

5. Verfahren nach einem der vorhergehenden Ansprüche, bei dem der organische Rest der Initiatorverbindung ein Rest einer Verbindung ist, die eine Disulfidgruppe -S-S- umfasst, die eine Brücke bildet zwischen zwei Teilen dieser Verbindung, wobei wenigstens einer dieser zwei Teile eine Phenylgruppe umfasst, die Träger einer Amidgruppe -NH-CO-R¹ ist, wobei R¹ eine Kohlenwasserstoffgruppe ist, die Träger wenigstens eines Halogenatoms ist.

6. Verfahren nach einem der vorhergehenden Ansprüche, bei dem das Polymer zur Familie der Polysulfone, der Polyetherketone, der Polyphenylene, der Polystyrole, der aliphatischen Fluorpolymere gehört, wobei es sich versteht, dass diese Polymere protonenleitende Gruppen enthalten müssen.

7. Verfahren nach einem der vorhergehenden Ansprüche, bei dem das Polymer aus der Polymerisation wenigstens eines Monomers der nachfolgenden Formel (III) hervorgegangen ist: 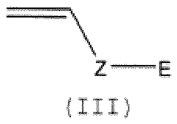 wobei:
- Z einer Phenylengruppe entspricht; und
- E einer protonenleitenden Gruppe entspricht, gegebenenfalls in Form eines Salzes,
in Anwesenheit einer Initiatorverbindung der vorgenannten Formel (I).

8. Verfahren nach einem der vorhergehenden Ansprüche, ferner umfassend, vor dem Schritt a), einen Schritt der Präparation des Polymers wie in Anspruch 1 definiert.

9. Verfahren nach Anspruch 1, bei dem das Kohlenstoffmaterial ausgewählt ist aus Graphit, Kohlenstoffschwarz, Kohlenstofffasern, Kohlenstoffröhren, Graphen und deren Mischungen.

10. Verfahren nach Anspruch 1 oder 9, ferner umfassend, vor dem Schritt a) einen Schritt der Präparation von Partikeln, umfassend ein Material, das dazu ausgelegt ist, die Reduktion von Sauerstoff oder die Oxidation von Wasserstoff zu katalysieren, die an ein Kohlenstoffmaterial gebunden sind.

11. Verfahren nach Anspruch 1 oder 9, umfassend, nach dem Schritt a) einen Schritt des Inkontaktbringens der am Ende des Schritts a) erhaltenen Partikel mit dem Kohlenstoffmaterial, wodurch die Partikel am Ende dieses Schritts des Inkontaktbringens an das Kohlenstoffmaterial gebunden werden.

12. Verfahren nach Anspruch 1 oder 9, umfassend einen Schritt der Präparation von Partikeln, umfassend ein Material, das dazu ausgelegt ist, die Reduktion von Sauerstoff oder die Oxidation von Wasserstoff zu katalysieren, die an ein Kohlenstoffmaterial gebunden sind, wobei dieser Schritt begleitend zum Schritt a) realisiert wird.

13. Polymer, umfassend:
- eine organische mittlere Gruppe, umfassend eine Disulfidgruppe -S-S-, die eine Brücke bildet zwischen zwei identischen Teilen, wobei jeder dieser Teile eine Phenylgruppe umfasst, die Träger einer Amidgruppe -NH-CO-R'¹- ist, wobei R'¹ eine divalente Kohlenwasserstoffgruppe ist;
- zwei Polymerketten, die wenigstens ein sich wiederholendes Motiv umfassen, das Träger wenigstens einer protonenleitenden Gruppe ist, die jeweils an die organische mittlere Gruppe über die Gruppe -R'¹- gebunden sind.

14. Polymer nach Anspruch 13, bei dem die protonenleitende Gruppe eine Sulfonsäuregruppe -SO₃H, eine Carboxylsäuregruppe -CO₂H oder eine Phosphonsäuregruppe -PO₃H₂ ist, wobei diese Gruppen gegebenenfalls in Form von Salzen vorhanden sein können.

15. Polymer nach Anspruch 13 oder 14, bei dem die Polymerketten zur Familie der Polysulfone, der Polyetherketone, der Polyphenylene, der Polystyrole, der aliphatischen Fluorpolymere gehören, wobei sich versteht, dass diese Ketten protonenleitende Gruppen umfassen müssen.

16. Polymer nach Anspruch 13 oder 14, bei dem die Polymerketten aus der Polymerisation wenigstens eines Monomers der nachfolgenden Formel (III) hervorgegangen sind: 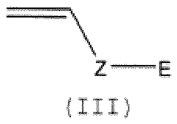 wobei:
- Z einer Phenylengruppe entspricht; und
- E einer protonenleitenden Gruppe entspricht, gegebenenfalls in Form eines Salzes.

## Claims

1. Method for preparing particles comprising a material capable of catalyzing the reduction of oxygen or the oxidation of hydrogen, said particles being functionalized by polymers comprising at least one repeating unit bearing at least one proton-conducting group, and said particles being covalently bonded to a carbon material, said method comprising a step a) of contacting particles, comprising a material capable of catalyzing the reduction of oxygen or the oxidation of hydrogen, with a polymer comprising at least one repeating unit bearing at least one proton-conducting group and comprising at least one portion corresponding to an organic radical of a compound that is an initiator for ARTP polymerization, said radical comprising at least one group capable of being grafted onto the surface of said particles, whereby particles, onto which polymers comprising at least one repeating unit bearing at least one proton-conducting group are grafted, are obtained.

2. Method according to claim 1, in which the particles are metal particles.

3. Method according to claim 1 or 2, in which the metal particles are particles comprising a noble metal, such as platinum, ruthenium, palladium and mixtures thereof.

4. Method according to any of the preceding claims, in which the organic radical of initiator compound is a radical derived from an organic halide compound comprising at least one group selected from -S-S- and -SH, -S-S- being a divalent disulfide group.

5. Method according to any of the preceding claims, in which the organic radical of initiator compound is a radical of a compound comprising a disulfide group -S-S- forming a bridge between two portions of said compound, at least one of said two portions comprising a phenyl group bearing an amide group -NH-CO-R¹, R¹ being a hydrocarbon group bearing at least one halogen atom.

6. Method according to any of the preceding claims, in which the polymer belongs to the family of polysulfones, polyetherketones, polyphenylenes, polystyrenes, fluorinated aliphatic polymers, it being understood that said polymers must comprise proton-conducting groups.

7. Method according to any of the preceding claims, in which the polymer is derived from the polymerization of at least one monomer of following formula (III): 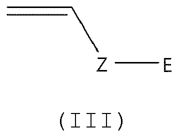 in which:
- Z corresponds to a phenyl group; and
- E corresponds to a proton-conducting group, potentially in the form of a salt, in the presence of an initiator compound of aforementioned formula (I).

8. Method according to any of the preceding claims, comprising, moreover, before step a), a step of preparing the polymer as defined in claim 1.

9. Method according to claim 1, in which the carbon material is selected from graphite, carbon black, carbon fibers, carbon tubes, graphene and mixtures thereof.

10. Method according to claim 1 or 9, comprising, moreover, before step a), a step of preparing particles comprising a material capable of catalyzing the reduction of oxygen or the oxidation of hydrogen bound to a carbon material.

11. Method according to claim 1 or 9, comprising, after step a), a step of contacting particles obtained at the end of step a) with the carbon material, whereby said particles are bound, at the end of said contacting step, to the carbon material.

12. Method according to claim 1 or 9, comprising a step of preparing particles comprising a material capable of catalyzing the reduction of oxygen or the oxidation of hydrogen bound to a carbon material, this step being carried out concomitantly with step a).

13. Polymer comprising:
- a median organic group comprising a disulfide group -S-S- forming a bridge between two identical portions, each of said portions comprising a phenyl group bearing an amide group -NH-CO-R'¹-, R'¹ being a divalent hydrocarbon group;
- two polymer chains comprising at least one repeating unit bearing at least one proton-conducting group each bound to the median organic group via the group -R'¹-.

14. Polymer according to claim 13, in which the proton-conducting group is a sulfonic acid group -SO₃H, a carboxylic acid group -CO₂H or a phosphonic acid group -PO₃H₂, said groups being able to be present potentially in the form of salts.

15. Polymer according to claim 13 or 14, in which the polymer chains belong to the family of polysulfones, polyetherketones, polyphenylenes, polystyrenes, fluorinated aliphatic polymers, it being understood that said chains must comprise proton-conducting groups.

16. Polymer according to claim 13 or 14, in which the polymer chains are derived from the polymerization of at least one monomer of following formula (III): 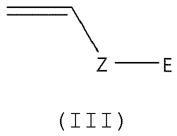 in which:
- Z corresponds to a phenyl group; and
- E corresponds to a proton-conducting group, potentially in the form of a salt.
